# EUROPEAN PATENT APPLICATION

(11) **EP 2 028 095 A2**
(43) Date of publication of application: **25.02.2009**
(21) Application number: 08014940.4
(22) Date of filing: 22.08.2008
(51) Int. Cl.: B62M 7/02

(54) **Motorcycle**

(30) Priority: 24.08.2007 JP 2007219070
(71) Applicant: Yamaha Hatsudoki Kabushiki Kaisha, Iwata-shi, Shizuoka-ken 438-8501 (JP)
(72) Inventor: Kakuta, Wataru, Iwata-shi, Shizuoka-ken 438-8501 (JP)
(74) Representative: Grünecker, Kinkeldey, Stockmair & Schwanhäusser Anwaltssozietät

(57) **Abstract**

The present invention relates to a motorcycle comprising: an exhaust system (6) extending in moving direction of the motorcycle rearward from an engine (3) mounted to a body frame (2) of the motorcycle; a fuel tank (4) mounted to the body frame (2) above the engine (3); and a seat (5) mounted to the body frame (2) to be positioned behind the fuel tank (4); the exhaust system (6) having a bent portion extending upward from a position below the seat toward the seat and then bending downward; and a heat insulating plate (30) being disposed in a space between the bent portion and the seat (5) so as to cover the bent portion.

## Description

The present invention relates to a motorcycle including an exhaust system extending rearward from an engine mounted on a body frame, a fuel tank mounted on the body frame above the engine, and a seat mounted on the body frame to be positioned behind the fuel tank.

A motorcycle is required to have a sufficiently long exhaust pipe to increase an engine output. Some of conventional motorcycles of this type includes an exhaust pipe connected with an engine and extended rearward below a fuel tank and a seat to ensure a required length of the exhaust pipe. In this conventional example a heat insulation structure, in which a heat insulating plate is disposed between the exhaust pipe, and the fuel tank and the seat, to prevent the fuel tank and the seat from overheating due to exhaust heat is proposed, as disclosed in JP-B-2771212.

Meanwhile, in the conventional motorcycle, because the exhaust pipe extends rearward along the fuel tank and the seat, the exhaust pipe is sufficiently long. However, covering this long exhaust pipe with a heat insulating plate throughout its length means upsizing of the heat insulating plate, thereby disadvantageously requiring additional cost and weight.

The present invention is made in view of the conventional circumstances discussed above.

It is an objective of the present invention to provide a motorcycle capable of ensuring a required length of the exhaust pipe while avoiding additional cost and weight due to upsizing of the heat insulating plate.

According to the present invention, said objective is solved by a motorcycle comprising: an exhaust system extending in moving direction of the motorcycle rearward from an engine mounted to a body frame of the motorcycle; a fuel tank mounted to the body frame above the engine; and a seat mounted to the body frame to be positioned behind the fuel tank; the exhaust system having a bent portion extending upward from a position below the seat toward the seat and then bending downward; and a heat insulating plate being disposed in a space between the bent portion and the seat so as to cover the bent portion.

In the motorcycle above, because the exhaust system has the bent portion extending upward from a position below the seat toward the seat and then bent downward, an exhaust pipe can be lengthened by the length of the bent portion. Accordingly, a required length of the exhaust pipe can be ensured.

Furthermore, the heat insulating plate is disposed in the space between the bent portion and the seat so as to cover the bent portion. Accordingly, heat transfer from the bent portion, at which the exhaust pipe is closest to the seat in the exhaust system and therefore in a thermally harsh condition, to the seat can be blocked while attaining downsizing of the heat insulating plate, thereby avoiding additional cost and weight.

Preferably, the heat insulating plate includes a main plate portion bending generally along a bottom plate of the seat and, preferably, a front wall portion extending downward from a front edge of the main plate portion, and/or a rear wall portion bending downward from a rear edge of the main plate portion.

Further, preferably a part of the insulating plate, preferably a part of the front wall portion, is positioned between the bent portion and the fuel tank.

Still further, preferably the body frame includes left and right seat rails supporting the seat and, preferably, the heat insulating plate is spanned across the left and the right seat rails and/or is attached thereto.

Yet further still, preferably the heat insulating plate is disposed above the left and the right seat rails.

Preferably, the heat insulating plate includes a support boss, to which a flange of the fuel tank is attached.

Further, preferably at least one electronic component is arranged between the heat insulating plate and the seat.

Still further, preferably the electronic component is mounted on the heat insulating plate.

Yet further still, preferably the heat insulating plate is made up of a resin plate.

Preferably, the heat insulating plate is made up of a metal plate.

Further, preferably the exhaust system has an exhaust pipe comprising the bent portion and extending in the shape of a substantially circular loop.

Still further, preferably the circular loop comprises a substantially circular opening in which an upper portion of a rear shock absorber of the motorcycle is located, when viewed from a rear direction of the motorcycle.

Yet further still, preferably a portion of a mudguard of the motorcycle covers a substantially circular opening of the circular loop, and, preferably the rear shock absorber, when viewed from a rear direction of the motorcycle.

Preferably, said portion of the mudguard is fixed to the exhaust system, preferably to the upwardly bent portion thereof.

Further, preferably the mudguard comprises a further portion which is arranged between the rear shock absorber and a rear wheel of the motorcycle.

In the following, the present invention is explained in greater detail by means of embodiments thereof in conjunction with the accompanying drawings, wherein:
- FIG. 1: is a side view of a motorcycle according to an embodiment;
- FIG. 2: is a side view of an exhaust system of the motorcycle;
- FIG. 3: is a side view of a heat insulating plate disposed in the exhaust system;
- FIG. 4: is a plan view of the heat insulating plate;
- FIG. 5: is a side view of the heat insulating plate;
- FIG. 6: is a cross-sectional front view of the heat insulating plate;
- FIG. 7: is a side view of a mudguard disposed in the exhaust system;
- FIG. 8: is a rear view of the mudguard; and
- FIG. 9: is a cross-sectional view of a guard of the mudguard.

### Among others, the following reference signs are used in the drawings:

1: motorcycle
2: body frame
3: engine
4: fuel tank
4a: flange
5: seat
5a: bottom plate
6: exhaust system
14: seat rail
25: exhaust pipe (exhaust system)
25b: upper exhaust pipe portion (bent portion)
30: heat insulating plate
30a: main plate portion
30b: front wall portion
30c: rear wall portion
30f: support boss
35: regulator (electrical component)
36: ECU (electrical component)

Embodiments will be hereinafter described based on the accompanying drawings.

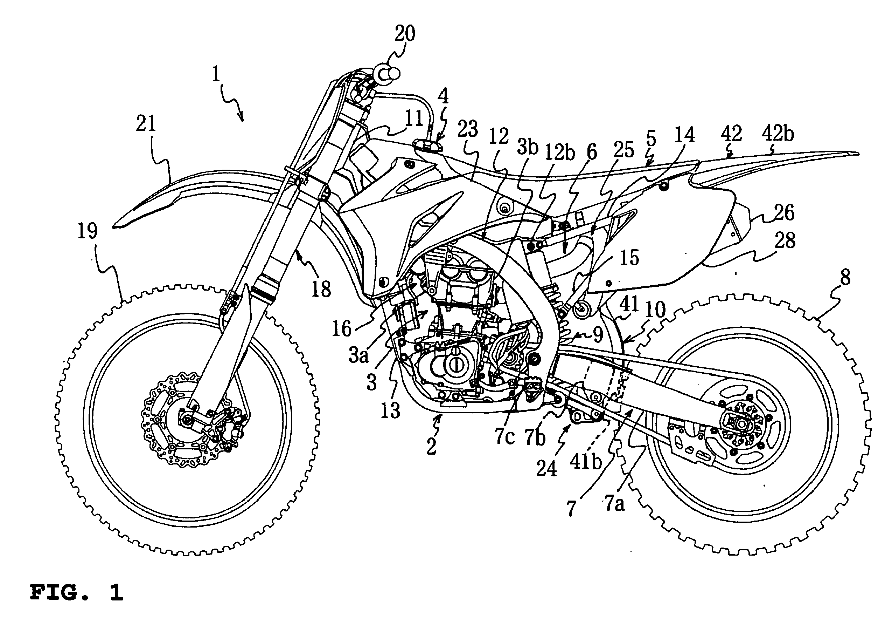

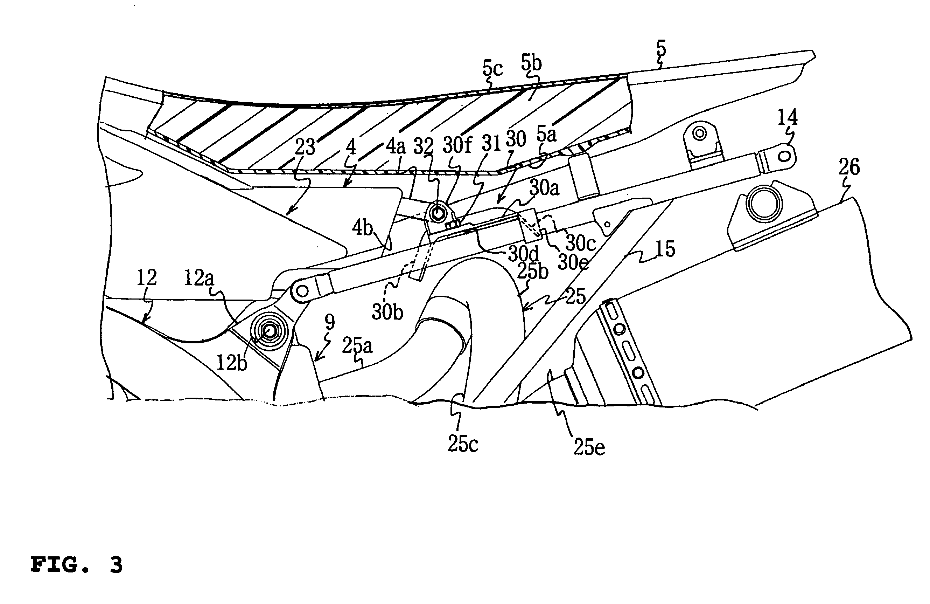

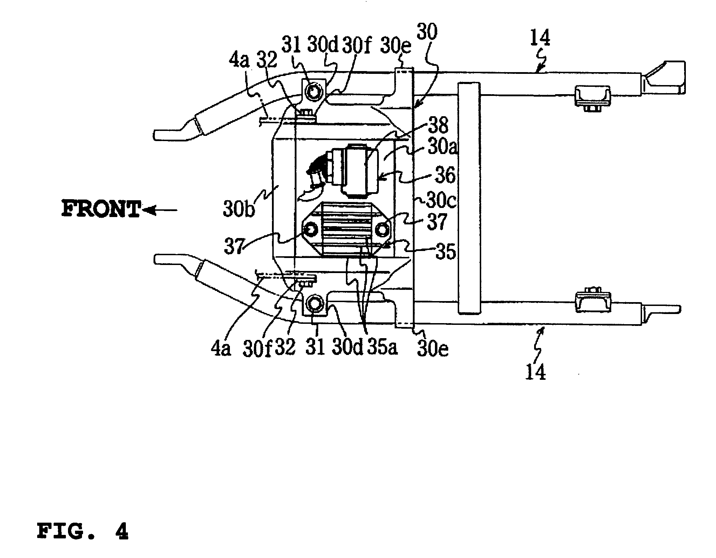

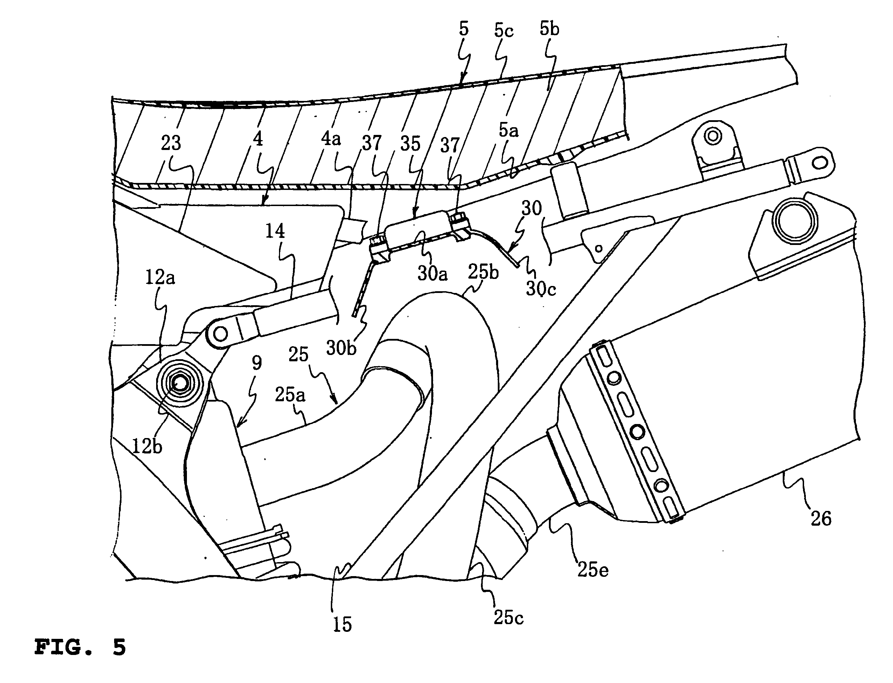

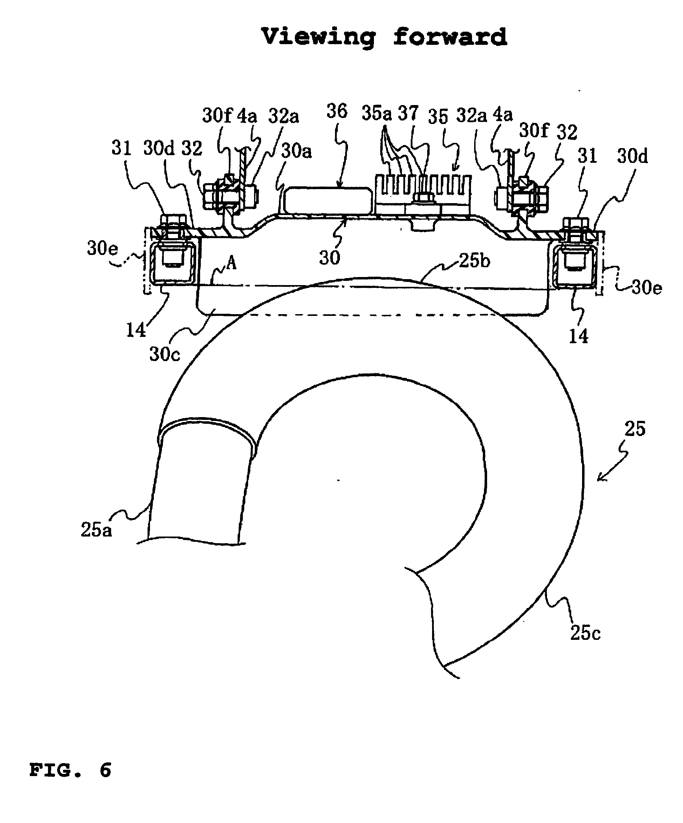

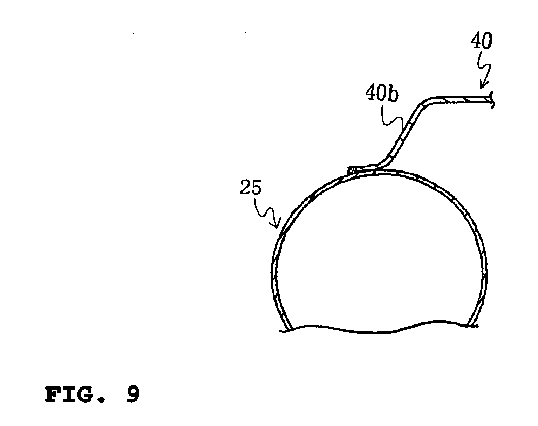

FIGS. 1 to 9 are views for explaining a motorcycle according to an embodiment. In the description of this embodiment, the terms front and rear, and left and right denote those from a seated rider's perspective unless otherwise specified.

Reference numeral 1 in the drawings denotes an off-road motorcycle. The motorcycle 1 includes a body frame 2, an engine 3 mounted on the body frame 2, a fuel tank 4 mounted on the body frame 2 above the engine 3, and a straddle-type seat 5 mounted on the body frame 2 to be positioned behind the fuel tank 4.

The motorcycle 1 also includes an intake system 16 extending forward from the engine 3, an exhaust system 6 extending rearward from the engine 3, a swing arm 7 vertically pivotally supported by the body frame 2, a rear wheel 8 supported by the rear end of the swing arm 7, a rear cushion 9 such as a shock absorber interposed between the swing arm 7 and the body frame 2, and a mudguard 10 disposed among the rear wheel 8, the rear cushion 9, and the seat 5.

The body frame 2 includes a head pipe 11 provided at the front end of the body frame 2, and left and right main frames 12, 12 extending obliquely downwardly and rearwardly from the head pipe 11, a down tube 13 extending downward from the head pipe 11, left and right seat rails 14, 14 extending obliquely upwardly and forwardly from bosses 12a formed on upper rear portions of the left and the right main frames 12, and left and right seat stays 15, 15, for coupling the left and the right seat rails 14 to the main frames 12.

The head pipe 11 supports a front fork 18 to be steerable to the left and right. The front fork 18 pivotally supports, at a lower end thereof, a front wheel 19. Steering handlebars 20 are attached to an upper end of the front fork 18. A front fender 21 for covering the front wheel 19 from above is also attached to the front fork 18.

Left and right side covers 23 are attached to the left and the right main frames 12, respectively, each on an outer side of corresponding one of the main frames 12 in a vehicle width direction to cover the fuel tank 4.

The swing arm 7 has left and right arm bodies 7a, 7a extending in a fore-and-aft direction and a cross member 7b for connecting front portions of the left and the right arm bodies 7a therebetween. The left and the right arm bodies 7a are supported at front ends thereof by lower ends of the left and the right main frames 12 via a pivot shaft 7c.

The rear cushion 9 is capable of absorbing a vertical shock transmitted to the rear wheel 8 from a road surface and is disposed behind the engine 3, in a vehicle-widthwise center portion, with its axis tilted slightly forward. The rear cushion 9 is disposed such that a lower portion of the rear cushion 9 extends vertically through a space defined by the left and the right arm bodies 7a, the cross member 7b, and the pivot shaft 7c.

The rear cushion 9 is coupled at an upper end thereof to a support shaft 12b. The support shaft 12b is positioned to extend through the bosses 12a, 12a of the left and the right main frames 12 in the vehicle width direction. The rear cushion 9 is coupled at a lower end thereof to the cross member 7b via a link mechanism 24.

The engine 3 is a water-cooled, 4-cycle, single cylinder engine. The engine 3 is mounted on the body frame 2 with a cylinder axis thereof extending generally vertically.

The intake system 16 has an intake pipe 16a connected to a front wall 3a of the engine 3 and linearly extending obliquely forwardly therefrom and an air cleaner (not shown) connected to the upstream end of the intake pipe 16a. The intake pipe 16a is in communication with an intake port defined in the front wall 3a.

The air cleaner is positioned between the left and the right main frames 12, 12, below the fuel tank 4, and covered with the left and the right side covers 23. Although not shown in the drawings, a throttle body, which incorporates a throttle valve, is inserted in the intake pipe 16a, and a fuel injection valve is disposed in the intake pipe 16a downstream from the throttle body.

The exhaust system 6 has, on a rear wall 3b of the engine 3, an exhaust pipe 25 connected to an exhaust port into communication therewith and a muffler 26 connected to the downstream end of the exhaust pipe 25. The muffler 26 is positioned below a vehicle-widthwise right one of the seat rails 14 and hung therefrom.

Left and right rear side covers 28, 28 are attached to vehicle-widthwise outer sides of the left and the right seat rails 14, respectively, to cover the muffler 26.

The exhaust pipe 25 extends from the rear wall 3b of the engine 3 obliquely rearwardly on the right of the rear cushion 9, and then is bent into a looped shape in a space between the rear cushion 9 and the rear wheel 8. The structure of the exhaust pipe 25 will be described below in detail.

The exhaust pipe 25 has a first exhaust pipe portion 25a, an upper exhaust pipe portion 25b, a second exhaust pipe portion 25c, a lower exhaust pipe portion 25d, and a third exhaust pipe portion 25e. The first exhaust pipe portion 25a extends from the rear wall 3b of the engine 3 obliquely rearwardly and upwardly in a space between the vehicle-widthwise right one of the main frames 12 and the rear cushion 9 in a rising manner. The upper exhaust pipe portion 25b having the shape of an upturned arc extends below a bottom plate 5a of the seat 5 from an upper portion of the first exhaust pipe portion 25a while being leftwardly bent in the vehicle widthwise direction. The second exhaust pipe portion 25c arcuately extends downward from a left portion of the upper exhaust pipe portion 25b therebelow. The lower exhaust pipe portion 25d having the shape of a downturned arc extends from a lower portion of the second exhaust pipe portion 25c while being rightwardly bent in the vehicle width direction. The third exhaust pipe portion 25e extending from a right portion of the lower exhaust pipe portion 25d obliquely upwardly and rearwardly. The muffler 26 is connected to the downstream end of the third exhaust pipe portion 25e.

As viewed from the rear of the vehicle, the first exhaust pipe portion 25a extends vertically on the right side of the exhaust pipe 25 in the vehicle width direction and the second exhaust pipe portion 25c extends vertically on the left side of the same in the vehicle width direction.

The upper exhaust pipe portion 25b extends in the vehicle width direction to connect the upper portions of the first exhaust pipe portion 25a and the second exhaust pipe portion 25c therebetween and is positioned highest in the exhaust pipe 25. The lower exhaust pipe portion 25d extends in the vehicle width direction to connect the lower portions of the first exhaust pipe portion 25a and the second exhaust pipe portion 25c. The lower exhaust pipe portion 25d is positioned lowest in the exhaust pipe 25.

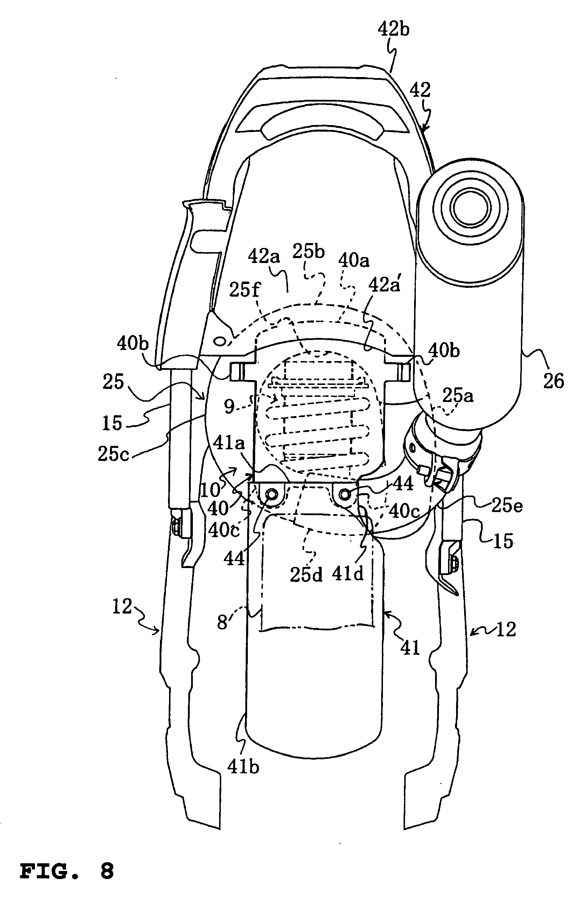

As described above, the exhaust pipe 25 extends in the shape of a generally circular loop in a space between the left and the right seat rails 14 and between the left and the right seat stays 15 when viewed from the rear of the vehicle. An upper portion of the rear cushion (rear shock absorber) 9 is positioned inside a circular opening 25f provided by the circular shape of the exhaust pipe 25 when viewed from the rear of the vehicle (see FIG. 8).

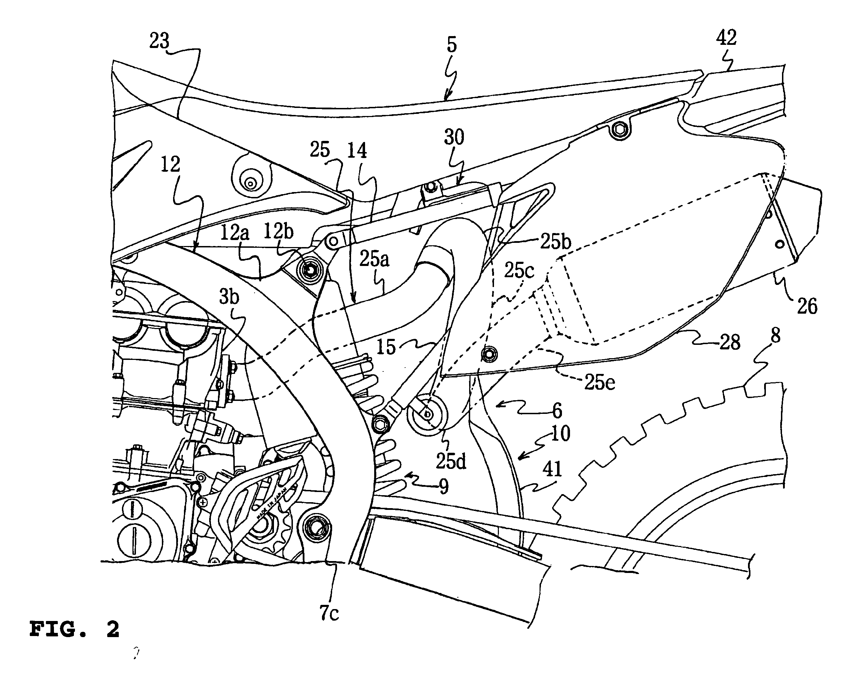

In the space between the rear cushion 9 and the rear wheel 8 in a left side view of the vehicle, the exhaust pipe 25 makes generally one revolution from front to back (see FIG. 2). The required length of the exhaust pipe 25 is ensured as described above.

An upper edge of the upper exhaust pipe portion 25b is positioned at a substantially same height as a line A drawn to connect between bottom surfaces of the seat rails 14, 14. The upper exhaust pipe portion 25b generally forms an upwardly-projecting bent portion and is in the proximity of the bottom surface of the bottom plate 5a of the seat 5. The seat 5 is constructed such that a seat cushion 5b made of resin is fixed on the seat bottom plate 5a made of resin with an adhesive and wrapped in an outer skin 5c made of resin. The lower exhaust pipe portion 25d is positioned at a substantially same heights as the vicinities of the front ends of the seat stays 15.

A heat insulating plate 30 is disposed in a space between the upper exhaust pipe portion 25b and the seat bottom plate 5a to cover the upper exhaust pipe portion 25b from above. The heat insulating plate 30 is made of a heat-resistant resin and has a planer main plate portion 30a extending generally along the seat bottom plate 5a, a front wall portion 30b, which is downwardly bent to continuously extend from a front edge of the main plate portion 30a, and a rear wall portion 30c, which is downwardly bent to continuously extend from a rear edge of the main plate portion 30a. The heat insulating plate 30 may be made up of a metal plate.

The front wall portion 30b extends to be positioned between the upper exhaust pipe portion 25b and the fuel tank 4. The main plate portion 30a, the front wall portion 30b, and the rear wall portion 30c cover the upper exhaust pipe portion 25b from above, obliquely forward, and obliquely rearward.

The heat insulating plate 30 is spanned across and attached to the left and right seat rails 14, which are positioned below the seat 5.

More specifically, the heat insulating plate 30 has left and right mounts 30d, 30d and left and right positioning-and-engaging portions 30e, 30e. The left and the right mounts 30d, 30d project outward in the vehicle width direction from left and right front edges of the main plate portion 30a. The left and the right positioning-and-engaging portions 30e, 30e project outward in the vehicle width direction from left and right rear edges of the main plate portion 30a and further bend downward. The left and the right positioning-and-engaging portions 30e are engaged with outer side surfaces of the seat rails 14, thereby positioning the heat insulating plate 30 in the vehicle width direction. The heat insulating plate 30 is detachably attached to the left and the right seat rails 14 by securing the left and the right mounts 30d onto upper surfaces of the seat rails 14 with bolts 31, 31.

The left and the right mounts 30d and the left and the right positioning-and-engaging portions 30e are formed so as to be stepped down from the main plate 30a. Accordingly, the main plate portion 30a is slightly higher than the upper surfaces of the left and the right seat rails 14. The left and the right seat rails 14 serve as left and right side walls extending downward from left and right edges of the main plate portion 30a. As a result, when viewed from the top of the vehicle, the upper exhaust pipe portion 25b is positioned inside a space surrounded by the left and the right seat rails 14, 14, the main plate portion 30a, the front wall portion 30b, and the rear wall portion 30c.

Support bosses 30f, 30f project upward from the main plate portion 30a at vehicle-widthwise inner positions relative to the left and right mounts 30d of the main plate portion 30a. A pair of a left and a right flanges 4a, 4a project rearward from a rear wall 4b of the fuel tank 4. A nut 32a is secured to an inner surface of each of the flanges 4a. The left and the right flanges 4a are fixed to the left and the right support bosses 30f with the nuts 32a and bolts 32 inserted thereinto from outer sides in the vehicle width direction.

Electrical components such as a regulator 35, an ECU 36, and the like are disposed parallel in the vehicle width direction on the top surface of the main plate portion 30a of the heat insulating plate 30.

The regulator 35 is detachably attached to the main plate portion 30a with a pair of a front and a rear bolts 37, 37. The regulator 35 includes a large number of cooling fins 35a formed at regular intervals in the vehicle width direction.

The ECU 36 controls fuel injection timing, an injection quantity, ignition timing, and the like of the fuel injection valve corresponding to an operating state of the engine 3. The ECU 36 is detachably attached to the main plate portion 30a with a rubber band 38.

The mudguard 10 includes a first guard 40 positioned in a space between the rear wheel 8 and an above-mentioned looped portion of the exhaust pipe 25, a second guard 41 positioned below the first guard 40, a rear fender 42 positioned above the rear wheel 8, and further a portion of the exhaust pipe 25.

The rear fender 42 made of resin extends in the fore-and-aft direction to cover a space below the seat 5 and between the left and the right seat rails 14, 14, and is attached to the left and the right seat rails 14.

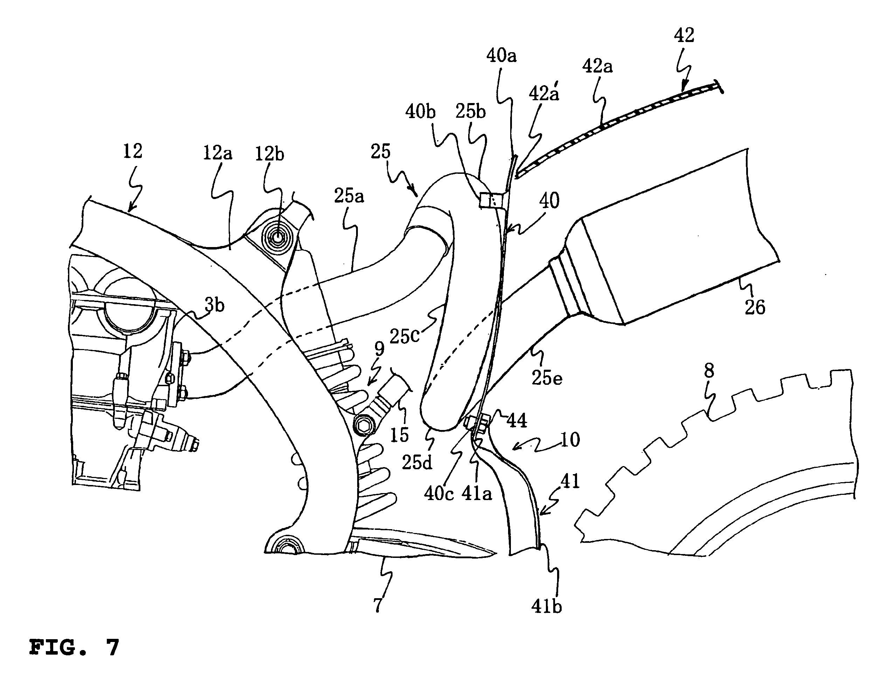

A front end 42a of the rear fender 42 is positioned in the vicinity of a front edge of the muffler 26. A rear end 42b of the rear fender 42 extends rearward from a rear edge of the seat 5 to form a surface continuing therefrom (see FIGs. 1 and 7).

The first guard 40 is made up of a metal plate of aluminum or stainless steel. The second guard 41 is made up of a resin plate or a metal plate.

The first guard 40 is attached to the exhaust pipe 25 at a position between the rear cushion 9 and the rear wheel 8. The structure of the first guard 40 will be described below in detail.

The first guard 40 is disposed in front of a front edge 42a' of the rear fender 42. An upper edge 40a of the first guard 40 overlaps the front edge 42a' of the rear fender 42 when viewed from the rear of the vehicle. The first guard 40 is disposed so as to seal the circular opening 25f defined by the first exhaust pipe portion 25a, the second exhaust pipe portion 25c, the upper exhaust pipe portion 25b, and the lower exhaust pipe portion 25d when viewed from the rear of the vehicle. The first guard 40 further covers the rear cushion 9 from behind (see FIG. 8).

Outer peripheries of the first exhaust pipe portion 25a, the upper exhaust pipe portion 25b, the second exhaust pipe portion 25c, and the lower exhaust pipe portion 25d are positioned outside of an outer periphery of the first guard 40. Hence, the exhaust pipe portions 25a to 25d function also as mudguards for preventing mud splashed by the rear wheel 8 from sticking to the rear cushion 9.

Left and right leg portions 40b, 40b are bent forward from left and right upper edges of the first guard 40. The left and right leg portions 40b are fixed by welding to the vicinities of boundaries between the upper exhaust pipe portion 25b, and the first and the second exhaust pipe portions 25a and 25c, respectively. The first guard 40 is fixed by welding to the upper exhaust pipe portion 25b in advance during a sub-assembly process of the exhaust system 6.

Left and right installation seats 40c, 40c project downward from a lower edge of the first guard 40. An upper edge 41 a of the second guard 41 is detachably attached to the left and the right installation seats 40c with bolts 44, 44.

The second guard 41 extends downward from the first guard 40 so as to be positioned in the space between the rear wheel 8 and the rear cushion 9. A lower end 41 b of the second guard 41 is positioned between the cross member 7b of the swing arm 7 and the rear wheel 8. A relief recess 41 d for preventing the second guard 41 from interfering with the third exhaust pipe portion 25e is defined in a right upper corner of the second guard 41.

The motorcycle 1 according to this embodiment adopts a front intake, rear exhaust layout having the intake system 16 extending forward from the front wall 3a of the engine 3 and the exhaust system 6 extending rearward from the rear wall 3b of the engine 3.

This structure allows to form the intake pipe 16a for supplying air to the engine 3 into a straight line, thereby cutting down intake resistance. In addition, because the air cleaner is positioned in front of the engine 3, running air can be supplied to the engine without undergoing influence of combustion heat of the engine 3 and the like, thereby increasing charging efficiency.

Furthermore, the exhaust pipe 25 of the exhaust system 6 extends straightly rearward from the rear wall 3b of the engine 3. This structure allows to simplify external appearance as compared with a structure in which the exhaust pipe 25 extends along a side of the engine, thereby lessening influence of exhaust heat exerted on legs of a rider.

In this case, a portion of the exhaust pipe 25 extends like a loop by utilizing the free space between the rear cushion 9 and the rear wheel 8 to form the bent portion. Accordingly, the required length of the exhaust pipe is ensured.

Meanwhile, when the exhaust pipe 25 is bent like a loop below the seat 5, the upper exhaust pipe portion 25b, that forms the bent portion, is positioned in the vicinity of the seat 5. In this case, exhaust heat may undesirably exert influence on a rider.

According to this embodiment, the heat insulating plate 30 covers the upper exhaust pipe portion 25b extending upward from a position below the seat 5 toward the seat 5 and then bent downward. Accordingly, heat transfer from the upper exhaust pipe portion 25b, which is under a thermally harsh condition, to the seat 5 can be blocked or suppressed, thereby eliminating or reducing influence of the exhaust heat on the rider.

In this case, only the upper exhaust pipe portion 25b, which is under the thermally harsh condition, is covered with the heat insulating plate 30. Accordingly, the heat insulating plate 30 can be downsized as compared with a conventional structure in which the exhaust pipe is covered throughout its length, thereby attaining reduction of additional cost and weight.

According to this embodiment, the heat insulating plate 30 has the planer main plate portion 30a bent generally along the bottom plate 5a of the seat 5, and the front wall portion 30b and the rear wall portion 30c extending downward from the front edge and the rear edge of the main plate portion 30a, respectively. Accordingly, the heat insulating plate 30 can cover the upper exhaust pipe portion 25b to surround the same from above, obliquely forward, and obliquely rearward, thereby reliably preventing exhaust heat from being transferred to the seat 5.

In addition, because the front wall portion 30b is positioned between the upper exhaust pipe portion 25b and the fuel tank 4, exhaust heat is less easily transferred to the fuel tank 4.

According to this embodiment, the heat insulating plate 30 is spanned across the left and the right seat rails 14 and attached thereto. Hence, by thus making good use of the seat rails 14, the heat insulating plate 30 is securely mounted.

According to this embodiment, the heat insulating plate 30 is disposed above the upper surfaces of the left and the right seat rails 14. This structure allows the seat rails 14 to function as the side walls of the heat insulating plate 30 extending downward from the left and the right edges of the heat insulating plate 30, thereby more reliably protecting the seat 5 from heat transfer of exhaust heat.

The left and the right support bosses 30f are formed on the heat insulating plate 30, and the left and the right flanges 4a provided on the fuel tank 4 are fastened to the support bosses 30f with the bolts. This structure allows the heat insulating plate 30 to function additionally as a fixing element of the fuel tank 4, thereby reducing the number of parts and cost.

According to this embodiment, electrical components such as the regulator 35, the ECU 36, and the like are mounted on the top surface of the heat insulating plate 30. Hence, by thus making good use of the heat insulating plate 30, the electrical components can be concentrated on the heat insulating plate 30, thereby allowing wire harnesses and the like to be reduced in length.

This embodiment has described the example motorcycle employing what is called a front intake, rear exhaust layout, in which the intake system 6 extends forward from the front wall 3a of the engine 3 and the exhaust system 6 extends rearward from the rear wall 3b. However, the present teaching can be applied to motorcycles of a rear intake, front exhaust layout. More specifically, in this case, the motorcycle may be arranged as follows. An exhaust pipe extends forward from an engine, passes by or bellow the engine to extend rearward, farther extends upward from a position bellow a seat toward the seat, and then extends downward to form a beat portion. The bent portion is covered with a heat insulating plate.

The description above discloses (among others) an embodiment of a motorcycle comprising: an exhaust system extending rearward from an engine mounted on a body frame; a fuel tank mounted on the body frame above the engine; and a seat mounted on the body frame to be positioned behind the fuel tank, wherein the exhaust system has a bent portion extending upward from a position below the seat toward the seat and then bending downward; and a heat insulating plate is disposed in a space between the bent portion and the seat so as to cover the bent portion.

Preferably, the heat insulating plate includes: a main plate portion bending generally along a bottom plate of the seat; a front wall portion extending downward from a front edge of the main plate portion; and a rear wall portion bending downward from a rear edge of the main plate portion.

Further, preferably a part of the front wall portion is positioned between the bent portion and the fuel tank.

Further, preferably the body frame includes left and right seat rails supporting the seat; and the heat insulating plate is spanned across the left and the right seat rails and attached thereto.

Further preferably the heat insulating plate is disposed above the left and the right seat rails.

Further, preferably the heat insulating plate includes a support boss, to which a flange formed on the fuel tank is attached.

Further, preferably an electronic component is mounted on the heat insulating plate.

Further, preferably the heat insulating is made up of a resin plate.

Further preferably the heat insulating is made up of a metal plate.

In order to provide a motorcycle capable of suppressing influence of exhaust heat on a rider while reducing additional cost due to upsizing of a heat insulating plate, an embodiment of an exhaust system (exhaust pipe) 6 has a bent portion (upper exhaust pipe portion) 25b extending upward from a position below a seat 5 toward the seat 5 and then bending downward. A heat insulating plate 30 is disposed in a space between the bent portion 25b and the seat 5 so as to cover the bent portion 25b.

## Claims

1. Motorcycle comprising:
an exhaust system (6) extending in moving direction of the motorcycle rearward from an engine (3) mounted to a body frame (2) of the motorcycle;
a fuel tank (4) mounted to the body frame (2) above the engine (3); and
a seat (5) mounted to the body frame (2) to be positioned behind the fuel tank (4);
the exhaust system (6) having a bent portion extending upward from a position below the seat (5) toward the seat (5) and then bending downward; and
a heat insulating plate (30) being disposed in a space between the bent portion and the seat (5) so as to cover the bent portion.

2. Motorcycle according to claim 1, wherein the heat insulating plate (30) includes a main plate portion (30a) bending generally along a bottom plate of the seat (5) and, preferably, a front wall portion (30b) extending downward from a front edge of the main plate portion (30a), and/or a rear wall portion (30c) bending downward from a rear edge of the main plate portion (30a).

3. Motorcycle according to claim 1 or 2, wherein a part of the insulating plate (30), preferably a part of the front wall portion (30b), is positioned between the bent portion and the fuel tank (4).

4. Motorcycle according to one of claims 1 to 3, wherein the body frame (2) includes left and right seat rails (14) supporting the seat (5) and, preferably, the heat insulating plate (30) is spanned across the left and the right seat rails (14) and/or is attached thereto.

5. Motorcycle according to claim 4, wherein the heat insulating plate (30) is disposed above the left and the right seat rails (14).

6. Motorcycle according to one of claims 1 to 5, wherein the heat insulating plate (30) includes a support boss (30f), to which a flange (4a) of the fuel tank (4) is attached.

7. Motorcycle according to one of claims 1 to 6, wherein at least one electronic component (35,36) is arranged between the heat insulating plate (30) and the seat (5).

8. Motorcycle according to claim 7, wherein the electronic component (35,36) is mounted on the heat insulating plate (30).

9. Motorcycle according to one of claims 1 to 8, wherein the heat insulating plate (30) is made up of a resin plate.

10. Motorcycle according to one of claims 1 to 8, wherein the heat insulating plate (30) is made up of a metal plate.

11. Motorcycle according to one of claims 1 to 10, wherein the exhaust system (6) has an exhaust pipe (25) comprising the bent portion and extending in the shape of a substantially circular loop.

12. Motorcycle according to claim 11, wherein the circular loop comprises a substantially circular opening (25f) in which an upper portion of a rear shock absorber (9) of the motorcycle is located, when viewed from a rear direction of the motorcycle.

13. Motorcycle according to claim 11 or 12, wherein a portion of a mudguard (10) of the motorcycle covers a substantially circular opening (25f) of the circular loop, and, preferably the rear shock absorber (9), when viewed from a rear direction of the motorcycle.

14. Motorcycle according to claim 13, wherein said portion of the mudguard (10) is fixed to the exhaust system (6), preferably to the upwardly bent portion thereof.

15. Motorcycle according to claim 13 or 14, wherein the mudguard (10) comprises a further portion which is arranged between the rear shock absorber (9) and a rear wheel (8) of the motorcycle.
